# EUROPÄISCHE PATENTSCHRIFT

(11) **EP 1 637 387 B1**
(45) Veröffentlichungstag und Bekanntmachung des Hinweises auf die Patenterteilung: **03.06.2009**
(21) Anmeldenummer: 04022008.9
(22) Anmeldetag: 16.09.2004
(51) Int. Cl.: B60K 37/02, G09F 9/37, G03B 21/00

(54) **Anzeigevorrichtung für ein Fahrzeug**
Display devise for a vehicle
Dispositif d'affichage pour un véhicule

(43) Veröffentlichungstag der Anmeldung: 22.03.2006
(73) Patentinhaber: Daimler AG, 70327 Stuttgart (DE)
(72) Erfinder: Crämer, Regine, 70597 Stuttgart (DE); Ludwig, Ralf, 70567 Stuttgart (DE); Oeffinger, Bernd, 70734 Fellbach (DE)
(74) Vertreter: JENSEN & SON

(56) Entgegenhaltungen:
- EP-A- 1 245 429
- WO-A-03/020545
- US-A1- 2003 142 043
- US-A1- 2003 160 892

## Beschreibung

Die Erfindung betrifft eine Anzeigevorrichtung für ein Fahrzeug gemäß dem Oberbegriff des Anspruchs 1.

Die DE 199 38 690 A1 offenbart ein Display, welches vom Fahrzeugnutzer mit einem zugehörigen Schaltelement oder automatisch bei Inbetriebsetzung des Fahrzeugs aufgeklappt wird.

Die DE 41 28 663 beschreibt eine Anzeigevorrichtung, zur Darstellung und zum Abrufen fahrzeugbezogener Informationen, mit einem Display, das zwischen zwei Positionen automatisch verrückbar ist. Zur Darstellung von Warnhinweisen wird das Display in die zweite Position verrückt, um durch diese Bewegung die Aufmerksamkeit des Fahrzeugführers hervorzurufen.

Die US 2003/0128103 A1 beschreibt eine Anzeigevorrichtung für ein Fahrzeug, welche ein Display zur Darstellung von Daten von Applikationen für einen Fahrzeugnutzer, wie beispielsweise Videodaten, umfasst sowie Schwenkmittel zum Verrücken des Displays zwischen zwei Positionen. Nachteilig an dieser bekannten Anzeigevorrichtung ist jedoch, dass diese viel Platz benötigt. Denn um das Display und die Schwenkmittel in die Position im Armaturenbrett verrückbar zu gestalten, muss dort ein relativ großer Bauraum vorgesehen werden. Dies ist insbesondere bei großen Displays nachteilig, da der im Armaturenbrett vorhandene Bauraum bereits zum Großteil von elektrischen Leitungen und Komponenten sowie Zu- und Abluftführungen belegt ist.

Aus der EP 1 245 429 A2 ist eine gattungsgemäße Anzeigevorrichtung für ein Fahrzeug bekannt. Insbesondere zeigt diese Anzeigevorrichtung ein mehrteiliges Schwenkmittel mit einem das elektronische Papier antreibendes Positionierungsmittel, ein kastenförmiges Positioniermittel, das das eingezogene elektronische Papier in seinem Innern weitgehend aufnimmt, und Stabilisierungsmittel zur stabilen Halterung des elektronischen Papiers in dem ausgefahrenen Zustand. Diese Anzeigevorrichtung erweist sich als aufwendig und wenig platzsparend.

Aufgabe der vorliegenden Erfindung ist es, eine platzsparende und für den Einsatz im Fahrzeug geeignete Anzeigevorrichtung anzugeben.

Diese Aufgabe wird durch die Merkmale des Anspruchs 1 gelöst. Vorteilhafte Ausführungen ergeben sich aus den abhängigen Ansprüchen.

Elektronisches Papier ist eine neuartige Displaytechnologie, die nur wenig Strom verbraucht und deshalb günstig im Fahrzeug einsetzbar ist. Da elektronisches Papier aus hochflexiblem, dünnem Material besteht, ist es bei Nichtgebrauch beispielsweise zusammenfaltbar und lässt sich besonders Platz sparend verstauen. Jedoch ergeben sich aus den Materialeigenschaften des elektronischen Papiers besondere Schwierigkeiten bei seinem Einsatz im Fahrzeug, da hier aufgrund von rauen Einsatzbedingungen, z.B. Vibrationen, eine Stabilisierung des elektronischen Papiers notwendig ist. Damit das elektronische Papier auch während der Fahrt einsetzbar ist, muss die Stabilisierung derart erfolgen, dass sie den Fahrzeugführer nicht von seiner Fahraufgabe ablenkt. Gleichzeitig jedoch sollen die vorteilhaften Materialeigenschaften des elektronischen Papiers weiterhin nutzbar bleiben. Hier gibt die Erfindung nun verschiedene Realisierungsmöglichkeiten an.

Erfindungsgemäß ist also wenigstens eine Position des elektronischen Papiers vorgesehen, in der es eine im wesentlichen ebene Oberfläche aufweist ("aufgefaltete Position") und demzufolge als normales Display zur Darstellung der Daten von Applikationen für einen Fahrzeugnutzer nutzbar ist. Der Fahrzeugnutzer muss in dieser Position weder besondere Tätigkeiten durchführen, z.B. das elektronische Papier festhalten, noch ergeben sich für ihn irgendwelche Einschränkungen bei der Nutzbarkeit des elektronischen Papiers als Display. Weiterhin ergibt sich ein besonders einfacher Aufbau der erfindungsgemäßen Anzeigevorrichtung, da das elektronische Papier in der aufgefalteten Position durch die Schwenkmittel fixiert ist. Es sind also keine zusätzlichen Komponenten notwendig sondern diejenigen Komponenten, die zum Verrücken (Ortsveränderung durch eine Bewegung wie bspw. Drehen oder Schwenken) des elektronischen Papiers vorgesehen sind, sorgen ebenfalls für die Fixierung.

In der aufgefalteten Position des elektronischen Papiers werden die Daten von Applikationen für den Fahrzeugnutzer auf dem elektronischen Papier dargestellt. Als Fahrzeugnutzer wird dabei insbesondere, aber nicht ausschließlich, der Fahrzeugführer betrachtet. Dabei können natürlich auch mehrere Positionen vorgesehen sein, in denen das elektronische Papier unter Verwendung der Schwenkmittel derart fixiert ist, das es eine im wesentlichen ebene Oberfläche aufweist. Beispielsweise kann eine erste, aufgefaltete Position vorgesehen sein, in der das elektronische Papier ein bequemes Betrachten von Fernseh- bzw. Filmbildern im Fahrzeug ermöglicht. Ein solches "Homelike-Entertainment" ist besonders auf ein großes Format des elektronischen Papiers angewiesen. Da in dieser aufgefalteten Position jedoch die Sicht des Fahrzeugführers auf die Straße beeinträchtigt sein könnte, ist diese Position nur geeignet wenn sich das Fahrzeug im Stillstand befindet. Als eine weitere Position, in der das elektronische Papier fixierbar ist ("Fahrposition"), kann eine übliche Position vorgesehen sein wenn das Fahrzeug fährt. In dieser Fahrposition ist insbesondere eine Sichtbeeinträchtigung für den Fahrzeugführer ausgeschlossen und so die Verkehrssicherheit gewährleistet. In der Fahrposition kann vorgesehen sein, dass das elektronische Papier für den Fahrzeugführer nicht sichtbar ist, was eine besonders verkehrssichere und auch optisch ansprechende Lösung ergibt. Eine andere Möglichkeit ist ein in Fahrposition nur teilweise aufgefaltetes elektronisches Papier, d.h. es ist nur ein Teil des elektronischen Papiers sichtbar. Auf diesem Teil kann z.B. eine Darstellung von Daten von Fahrerassistenzsystemen vorgesehen sein, wodurch ein universeller Einsatz des elektronischen Papiers ermöglicht wird. Weiterhin kann vorgesehen sein, dass ein Umschalten zwischen den verschiedenen Fahrpositionen des elektronischen Papiers möglich ist, beispielsweise im Rahmen eines Werkstattaufenthalts über eine Diagnoseschnittstelle.

Insbesondere wenn das Fahrzeug ein Nutzfahrzeug ist, also einen relativ großen Fahrerraum aufweist, sind großformatige Displays, d.h. solche mit großer Bildschirmdiagonalen, möglich. Eine Näherungsregel zur Bestimmung einer geeigneten Bildschirmdiagonale besagt, die Bildschirmdiagonale als ein Drittel derjenigen Größe zu wählen, die der Entfernung des Betrachters vom Display entspricht. Bei einer üblichen Nutzfahrzeugkabine wäre dann ein Display mit einer Bildschirmdiagonale von etwa dreiundzwanzig Zoll geeignet. Ein derart großformatiges Display würde, wenn es in die Position im Armaturenbrett verrückbar wäre, dort einen enormen Bauraum verbrauchen. Das Display muss jedoch verrückbar sein, da es in einer für "Homelike-Entertainment" geeigneten Position die Sicht des Fahrzeugführers auf die Straße und damit die Verkehrssicherheit massiv beeinträchtigen würde. Hier werden durch die vorliegende Erfindung nun überzeugende Lösungen angeboten.

Fahrerassistenzsysteme, beispielsweise ein Nachsichtgerät, eine Rückfahrkamera oder ein Wegleitsystem, benötigen kein so großes Display wie bspw. ein "Homelike-Entertainment". Deshalb ist zur Darstellung der Daten von Fahrerassistenzsystemen das Display bspw. in einer Position vorgesehen, in der nur eine Höhe entsprechend einer relativ kleinen Diagonale, beispielsweise sieben Zoll, sichtbar ist. Diese Displayhöhe ist üblicher Weise ausreichend zur Darstellung der Daten von Fahrerassistenzsystemen. Dabei besteht ein Vorteil eines großen Displays, bspw. eines Displays mit einer Diagonale von dreiundzwanzig Zoll, darin, dass selbst in einer Position in der es die Höhe eines Displays mit einer Diagonale von sieben Zoll aufweist, noch wesentlich breiter ist als ein solches Display von sieben Zoll. Dies ermöglicht es beispielsweise die Daten mehrerer Fahrerassistenzsysteme gleichzeitig auf dem teilweise ausgefahrenen Display darzustellen. So kann der Fahrzeugführer beispielsweise Zielführung und automatische Verkehrszeichenerkennung gleichzeitig nutzen und ist dadurch besonders gut informiert. Alternativ oder zusätzlich ist vorgesehen, Applikationen die auch eine größere Displayfläche nutzen können, bspw. ein Nachtsichtgerät durch eine höhere Bildauflösung, die entsprechende Displayfläche durch eine entsprechende Position des Displays bereitzustellen und so die Darstellung für den Fahrzeugführer weiter zu verbessern.

Die Möglichkeit der Darstellung verschiedener Displayhöhen ermöglicht es, eine Platz sparende Anzeigemöglichkeit zu realisieren. Es wird nur jeweils so viel Platz, bspw. am Armaturenbrett, belegt, wie gerade nötig ist. Der Sichtbereich des Fahrzeugführers ist stets ungestört da das Display jeweils nur so weit ausgefahren ist, wie zur Darstellung der Daten nötig. Dadurch, dass nur ein Display zur Darstellung der Daten für verschiedene Fahrzeugsysteme eingesetzt zu werden braucht, ergeben sich Kosten- und Platzvorteile sowie eine Bündelung von darzustellender Information an einer Stelle im Fahrzeug.

Gemäß der Erfindung umfassen die Schwenkmittel eine Hülse, aus welcher das elektronische Papier ausrollbar ist. Damit ergibt sich eine platzsparende und zweckmäßige Möglichkeit, das elektronische Papier komfortabel und problemlos zu verstauen. Das Aus- und/ oder Einrollen des elektronischen Papiers aus bzw. in die Hülse ist manuell, z.B. über ein Drehrad, und/ oder automatisch, z.B. über einen Motor, vorgesehen. Die Hülse kann beispielsweise im Bereich des Armaturenbretts vorgesehen sein, wobei das elektronische Papier nach "oben" ausrollbar ist. Alternativ ist die Hülse im Bereich des Fahrzeughimmels vorgesehen, wobei das elektronische Papier nach "unten" ausrollbar ist. Natürlich sind auch andere Positionen möglich, beispielsweise im Bereich der A-Säule, wobei das elektronische Papier "seitwärts" ausrollbar ist.

Das elektronische Papier kann in dieser Ausführungsform aus der Hülse unter Benützung eines Scherengitters aus- bzw. einrollbar sein. Damit ergibt sich ein einfacher und robuster Aufbau. Das Scherengitter "zieht" das elektronische Papier aus der Hülse und sorgt beim einrollen in die Hülse dafür, das das elektronische Papier "glatt" in der Hülse aufgerollt wird. Weiterhin wird das elektronische Papier in wenigstens einer Position unter Verwendung des Scherengitters derart fixiert, das es eine im wesentlichen ebene Oberfläche aufweist. Dazu kann am oberen Ende des elektronischen Papiers, der zuerst aus der Hülse ausgerollt wird, ein Rand zur Versteifung des elektronischen Papiers vorgesehen sein. Das Scherengitter kann, wenn das elektronische Papier in die Hülse eingerollt ist, im Bereich der Hülse kompakt zusammengefaltet vorgesehen werden.

Alternativ oder zusätzlich ist das elektronische Papier aus der Hülse unter Benützung eines Rahmens ausrollbar. Dieser Rahmen kann einteilig vorgesehen sein und beispielsweise aus dem Armaturenbrett derart ausgefahren werden, dass er beim Ausfahren das elektronische Papier ausrollt. Da der Rahmen beispielsweise als Draht ausgeführt ist, verbraucht er wesentlich weniger Bauraum im Armaturenbrett als etwa ein massives Display. Alternativ ist ein bieg- oder klappbarer Rahmen vorgesehen, welcher sich beim Ausrollen des Displays "entfaltet". Der Rahmen "zieht" das elektronische Papier aus der Hülse und sorgt beim Einrollen in die Hülse dafür, das das elektronische Papier "glatt" in der Hülse aufgerollt wird. Weiterhin wird das elektronische Papier in wenigstens einer Position unter Verwendung des Rahmens derart fixiert, dass es eine im wesentlichen ebene Oberfläche aufweist.

In einer weiteren, besonders bevorzugten Ausführungsform der Erfindung umfassen die Schwenkmittel einen fahrzeugseitigen Vorhang. Ein solcher Vorhang ist üblicherweise bereits in Nutzfahrzeugen vorhanden, um eine Verdunklung für den Fahrzeugführer in Ruhepausen zu ermöglichen. Weiterhin sind solche Vorhänge aus Limousinen bekannt, um den Bereich des Fahrzeugführers von dem der Passagiere abzutrennen. Ein solcher Vorhang wird nun erfindungsgemäß mit dem elektronischen Papier beaufschlagt. Dazu wird beispielsweise das elektronische Papier selbst als Vorhang bzw. Teil des Vorhangs vorgesehen, oder das elektronische Papier wird fest mit dem Vorhangmaterial verbunden. Da das elektronische Papier hochflexibel ist, ergibt sich handhabungsgemäß kein Unterschied zu einem "normalen" Vorhang. Damit das elektronische Papier in wenigstens einer Position unter Verwendung des Vorhangs derart fixiert ist, das es eine im wesentlichen ebene Oberfläche aufweist, wird eine spezielle Ausprägung des Vorhangs vorgeschlagen. Dabei ist ein manuelles und/ oder automatisches Verrücken des Vorhangs vorgesehen.

In einer ersten, speziellen Ausprägung des Vorhangs ist vorgesehen, dass der Vorhang als fixierbares Rollo ausgebildet ist. Ein derartiges Rollo wird beispielsweise im Bereich des Fahrzeughimmels aufgerollt. Ein Rand des Rollos ist beweglich um das Rollo auszurollen. Die Fixierung des Rollos nach dem Ausrollen wird beispielsweise unter Verwendung von Ösen erreicht, in denen der bewegliche Rand des Rollos eingehakt wird. Dabei ist das elektronische Papier in wenigstens dieser Position derart fixiert, dass es eine im wesentlichen ebene Oberfläche aufweist.

In einer zweiten, speziellen Ausprägung des Vorhangs ist vorgesehen, dass der Vorhang als verrückbare Blende ausgebildet ist. Eine solche Blende wird beispielsweise in Form einer großen Sonnenblende vorgesehen. Durch Verrücken der Blende in ihre Endposition ist das elektronische Papier in wenigstens dieser Position derart fixiert, dass es eine im wesentlichen ebene Oberfläche aufweist.

Mit Vorteil wird vorgeschlagen, dass die Schwenkmittel für ein manuelles Verrücken des elektronischen Papiers ausgebildet sind. Dies ergibt eine besonders einfache Realisierungsform. Alternativ oder zusätzlich ist vorgesehen, dass die Schwenkmittel für ein automatisches Verrücken des elektronischen Papiers ausgebildet sind. Hierfür sind beispielsweise elektrische, hydraulische, piezoelektrische oder andere Mittel vorgesehen. Es ergibt sich eine besonders komfortable Realisierungsform. Das manuelle Verrücken des elektronischen Papiers kann dabei auch über entsprechende Bedienelemente vorgesehen sein, wobei das Verrücken des elektronischen Papiers durch die Betätigung der Bedienelemente durch den Fahrzeugnutzer z.B. motorisch bewirkt wird.

In einer bevorzugten Ausführungsform ist vorgesehen, dass die Schwenkmittel zum Verschieben und/oder Neigen und/oder Drehen des elektronischen Papiers ausgebildet sind. Insbesondere beim manuellen Verrücken des Displays ermöglicht eine wahlfreie Positionierung des Displays in beliebiger Position es dem Fahrzeugnutzer, sich genau die Position des Displays auszusuchen, die er haben möchte.

Vorzugsweise sind auf dem und/oder beim elektronischen Papier Bedienelemente vorgesehen, da es hiermit dem Fahrzeugführer ermöglicht wird, die bereits vorteilhafte Position des Displays nun auch für die Bedienelemente zu nutzen. Dabei sind beispielsweise Bedienelemente für Kontrast, Helligkeit, Programmwahl oder ähnliches vorgesehen.

Zusammengefasst ermöglicht es die Erfindung, die verschiedenen Anzeigeaufgaben für einen Fahrzeugnutzer vorteilhaft zusammenzufassen. Die Darstellung von Daten einer ansteigenden Anzahl von Fahrzeugassistenzsystemen sowie von ebenfalls anwachsenden "Homelike-Entertainment" Funktionen wird durch die Erfindung besonders einfach auf einem Display gebündelt. Indem dieses Display als elektronisches Papier ausgeführt ist, ergibt sich selbst bei großformatigen Displays nur ein sehr geringer Bauraumbedarf. Weiterhin ermöglicht die Erfindung völlig neuartige Realisierungen. Beispielsweise wäre es nun möglich, das elektronische Papier im Lenkrad aufzurollen. Zusätzlich kann eine dem elektronischen Papier zugeordnete Eingabetastatur, beispielsweise Folientastatur, ebenfalls in den Bereich des Lenkrades versetzt bzw. ausgerollt werden. Es ergibt sich ein besonders platzsparend verstaubarer Computerarbeitsplatz für den Fahrzeugnutzer, beispielsweise zum Surfen im Internet, zur Erledigung von Dispositionsaufgaben oder zum Abrufen der E-Mail.

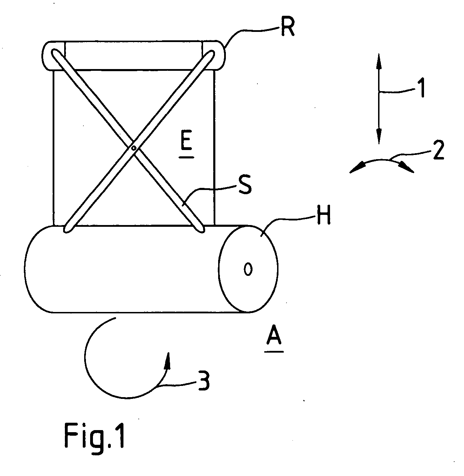

Die Erfindung wird nun anhand einer Zeichnung erläutert. Dabei zeigt die einzige Fig. eine bevorzugte Ausführungsform der Erfindung.

Fig. zeigt eine rückwärtige Ansicht einer im Bereich des Armaturenbretts A vorgesehenen Hülse H, in die das elektronische Papier E unter Benützung eines Scherengitters S aus- bzw. einrollbar 1 ist. Die Hülse H ist dabei schwenkbar 2 und drehbar 3, um dem Fahrzeugführer eine angenehme und sichere Betrachtung der auf dem elektronischen Papier E dargestellten Daten zu ermöglichen. Das Scherengitter S "zieht" das elektronische Papier E aus der Hülse H und sorgt beim Einrollen in die Hülse H dafür, das das elektronische Papier E "glatt" in der Hülse H aufgerollt wird. Weiterhin wird das elektronische Papier E in der gezeigten Position unter Verwendung des Scherengitters S derart fixiert, das es eine im wesentlichen ebene Oberfläche aufweist. Dazu ist am oberen Ende des elektronischen Papiers E ein Rand R zur Versteifung des elektronischen Papiers E vorgesehen.

## Patentansprüche

1. Anzeigevorrichtung für ein Fahrzeug, umfassend ein Display aus hochflexiblem, dünnem Material, sogenanntes "elektronisches Papier" (E), zur Darstellung von Daten von Applikationen für einen Fahrzeugnutzer, ferner mit Schwenkmitteln zum Verrücken des Displays zwischen wenigstens zwei Positionen, mittels welchen Schwenkmitteln das Display in wenigstens einer Position mit einer im wesentlichen ebenen Oberfläche fixierbar ist, wobei die Schwenkmittel eine das Display wenigstens teilweise aufnehmende Hülse (H) umfassen, innerhalb der das elektronische Papier (E) bewegbar ist,
**dadurch gekennzeichnet,**
**dass** die Schwenkmittel ein Scherengitter (S) umfassen, dass das elektronische Papier (E) in Ruhelage zumindest weitgehend in die Hülse (H) einrollbar angeordnet und aus der Hülse (H) ausrollbar ist und dass das elektronische Papier (E) aus der Hülse (H) unter Benützung des Scherengitters (S) ausrollbar ist.

2. Anzeigevorrichtung nach Anspruch 1, wobei an dem Scherengitter (S) ein Rahmen angeordnet ist, und wobei das elektronische Papier (E) aus der Hülse (H) unter Benützung des Rahmens ausrollbar ist.

3. Anzeigevorrichtung nach Anspruch 1, wobei die Schwenkmittel einen fahrzeugseitigen Vorhang umfassen.

4. Anzeigevorrichtung nach Anspruch 3, wobei der Vorhang als fixierbares Rollo ausgebildet ist.

5. Anzeigevorrichtung nach Anspruch 3, wobei der Vorhang als verrückbare Blende ausgebildet ist.

6. Anzeigevorrichtung nach einem der vorhergehenden Ansprüche, wobei das Scherengitter (S) für ein manuelles Verrücken des elektronischen Papiers (E) ausgebildet ist.

7. Anzeigevorrichtung nach einem der vorhergehenden Ansprüche, wobei das Scherengitter (S) für ein automatisches Verrücken des elektronischen Papiers (E) ausgebildet ist.

8. Anzeigevorrichtung nach einem der vorhergehenden Ansprüche, wobei die Schwenkmittel zum Verschieben und/ oder Neigen und/ oder Drehen des elektronischen Papiers ausgebildet sind.

9. Anzeigevorrichtung nach einem der vorhergehenden Ansprüche, wobei als Applikation die Darstellung der Daten von Fahrerassistenzsystemen auf dem elektronischen Papier (E) vorgesehen ist.

10. Anzeigevorrichtung nach einem der vorhergehenden Ansprüche, wobei das Fahrzeug ein Nutzfahrzeug ist und das elektronische Papier (E) eine Diagonale von etwa dreiundzwanzig Zoll aufweist.

11. Anzeigevorrichtung nach Anspruch 10, wobei als Applikation die Darstellung von Fernseh- bzw. Filmdaten auf dem elektronischen Papier (E) vorgesehen ist.

12. Anzeigevorrichtung nach einem der vorhergehenden Ansprüche, wobei wenigstens eine Position von Scherengitter (S) und elektronischem Papier (E) im Bereich des Armaturenbretts (A) vorgesehen ist.

13. Anzeigevorrichtung nach einem der vorhergehenden Ansprüche, wobei wenigstens eine Position von Scherengitter (S) und elektronischem Papier (E) im Bereich des Fahrzeughimmels vorgesehen ist.

14. Anzeigevorrichtung nach einem der vorhergehenden Ansprüche, wobei auf dem und/ oder beim elektronischen Papier (E) Bedienelemente vorgesehen sind.

## Claims

1. Display device for a vehicle, comprising a display made of a highly flexible, thin material, so-termed "electronic paper" (E), for the display of data concerning applications for a user of the vehicle, and further, with pivoting means for moving the display between at least two positions, by which pivoting means the display can be fixed in at least one position with an essentially flat surface, such that the pivoting means comprise a casing (H), which houses the display at least partially, within which the electronic paper (E) can be moved,
**characterised in that**
the pivoting means comprise a tensioning trellis (S), in its rest position the electronic paper (E) can be at least largely rolled up into the casing (H) and the electronic paper (E) can be rolled out of the casing (H) using the tensioning trellis (S).

2. Display device according to Claim 1, such that a frame is arranged on the tensioning trellis (S), and the electronic paper (E) can be rolled out of the casing (H) using the said frame.

3. Display device according to Claim 1, such that the pivoting means comprise a curtain on the vehicle.

4. Display device according to Claim 3, such that the curtain is in the form of a roller-blind that can be fixed.

5. Display device according to Claim 3, such that the curtain is in the form of a movable screen.

6. Display device according to any of the preceding claims, such that the tensioning trellis (S) is designed to enable the electronic paper (E) to be moved by hand.

7. Display device according to any of the preceding claims, such that the tensioning trellis (S) is designed to enable automatic moving of the electronic paper (E).

8. Display device according to any of the preceding claims, such that the pivoting means are designed to enable the electronic paper to be displaced and/or tilted and/or turned.

9. Display device according to any of the preceding claims, such that as an application the display of data from driver-assistance systems on the electronic paper (E) is provided for.

10. Display device according to any of the preceding claims, such that the vehicle is a commercial vehicle and the electronic paper (E) has a diagonal dimension of approximately twenty-three inches.

11. Display device according to Claim 10, such that as an application the display of television or film data on the electronic paper (E) is provided for.

12. Display device according to any of the preceding claims, such that at least one position of the tensioning trellis (S) and the electronic paper (E) is provided in the area of the instrument panel.

13. Display device according to any of the preceding claims, such that at least one position of the tensioning trellis (S) and the electronic paper (E) is positioned in the area of the vehicle's roof.

14. Display device according to any of the preceding claims, such that operating elements are provided on and/or near the electronic paper (E).

## Revendications

1. Dispositif d'affichage pour un véhicule, comprenant un affichage fabriqué avec un matériau fin et extrêmement souple, ce qu'il est convenu d'appeler « papier électronique » (E) pour la présentation de données d'applications pour un utilisateur de véhicule, en outre avec des organes pivots permettant de déplacer l'affichage entre au moins deux positions, au moyen de ces organes pivots l'affichage peut être fixé au moins dans une position avec une surface essentiellement plane, les organes pivots comprenant un tube (H) logeant au moins partiellement l'affichage, à l'intérieur duquel le papier (E) électronique peut se déplacer,
**caractérisé en ce que**,
les organes pivots comprennent un grillage à ciseaux (S), **en ce que** le papier électronique (E) en position de repos est au moins en grande partie disposé dans le tube (H) de manière à pouvoir être enroulé et à pouvoir être déroulé du tube (H) et **en ce que** le papier électronique (E) peut être déroulé du tube (H) à l'aide du grillage à ciseaux (S).

2. Dispositif d'affichage selon la revendication 1, un cadre étant disposé sur le grillage à ciseaux (S), et le papier électronique (E) pouvant être déroulé du tube (H) à l'aide du cadre.

3. Dispositif d'affichage selon la revendication 1, les organes pivots comprenant un rideau côté véhicule.

4. Dispositif d'affichage selon la revendication 3, le rideau étant conçu en tant que store pouvant être fixé.

5. Dispositif d'affichage selon la revendication 3, le rideau étant conçu en tant que bandeau pouvant être déplacé.

6. Dispositif d'affichage selon l'une quelconque des revendications précédentes, le grillage à ciseaux (S) étant conçu pour un déplacement manuel du papier électronique (E).

7. Dispositif d'affichage selon l'une quelconque des revendications précédentes, le grillage à ciseaux (S) étant conçu pour un déplacement automatique du papier électronique (E).

8. Dispositif d'affichage selon l'une quelconque des revendications précédentes, les organes pivots étant conçus pour faire coulisser et / ou incliner et / ou faire tourner le papier électronique (E).

9. Dispositif d'affichage selon l'une quelconque des revendications précédentes, la représentation des données de systèmes d'assistance au conducteur étant prévue en tant qu'application sur le papier électronique (E).

10. Dispositif d'affichage selon l'une quelconque des revendications précédentes, le véhicule étant un véhicule utilitaire et le papier électronique (E) présentant une diagonale d'environ vingt trois pouces.

11. Dispositif d'affichage selon l'une la revendication 10, en tant qu'application la représentation des données de télévision et / ou de film étant prévue sur le papier électronique (E).

12. Dispositif d'affichage selon l'une quelconque des revendications précédentes, au moins une position du grillage à ciseaux (S) et du papier électronique (E) étant prévue dans la région du tableau de bord (A).

13. Dispositif d'affichage selon l'une quelconque des revendications précédentes, au moins une position du grillage à ciseaux (S) et du papier électronique (E) étant prévue dans la région du plafond du véhicule.

14. Dispositif d'affichage selon l'une quelconque des revendications précédentes, des éléments de commande étant prévus sur le papier électronique (E) et / ou à proximité de celui-ci.
